# EUROPÄISCHE PATENTANMELDUNG

(11) **EP 1 544 442 A2**
(43) Veröffentlichungstag der Anmeldung: **22.06.2005**
(21) Anmeldenummer: 04105879.3
(22) Anmeldetag: 18.11.2004
(51) Int. Cl.: F02D 41/02

(54) **Verfahren zur Erhöhung der Abgastemperatur von Brennkraftmaschinen**

(30) Priorität: 18.12.2003 DE 10359674
(71) Anmelder: SIEMENS AKTIENGESELLSCHAFT, 80333 München (DE)
(72) Erfinder: GRAUPNER, Olaf, 93083, Obertraubling (DE); WISSLER, Gerhard, 93104, Sünching (DE)

(57) **Zusammenfassung**

Die Erfindung betrifft ein Verfahren zur Erhöhung der Abgastemperatur von Brennkraftmaschinen, insbesondere zum Antrieb eines Kraftfahrzeugs, durch Lastbeaufschlagung, um die notwendige Regenerationstemperatur von mindestens einer Komponente einer Abgasnachbehandlungsanlage zu erreichen, wobei die Lastbeaufschlagung durch mindestens eine der Bremsen des Kraftfahrzeugs und/ oder durch das Anfahrelements des Kraftfahrzeugs erzielt wird.

## Beschreibung

Die Erfindung betrifft ein Verfahren zur Erhöhung der Abgastemperatur von Brennkraftmaschinen, insbesondere zum Antrieb eines Kraftfahrzeugs, durch Lastbeaufschlagung, um die nötige Regenerationstemperatur von mindestens einer Komponente einer Abgasnachbehandlungsanlage zu erreichen.

Zur Einhaltung der strikten gesetzlichen Anforderung an die Emissionen von Brennkraftmaschinen ist es notwendig, die Abgase von Ottomotoren und Dieselmotoren mit Hilfe einer Abgasnachbehandlung zu reinigen, um damit die Gesetzesauflagen einzuhalten. Bekannte Komponente einer Abgasnachbehandlungsanlage sind Partikelfilter und NOₓ-Speicherkatalysatoren.

Diese Komponenten besitzen die Eigenschaft, dass für bestimmte Betriebsbedingungen erhöhte Abgastemperaturen benötigt werden. Üblicherweise werden diese durch Nacheinspritzung von Kraftstoff dargestellt, welcher auf einem nachfolgenden Katalysator thermisch umgesetzt wird. Weitere Bekannte Maßnahmen sind Späteinspritzung, Nacheinspritzung und Drosselung. Mit diesen Eingriffen kann die Abgastemperatur um ca. 200°C erhöht werden.

Gegenüber einem Ottomotor weist ein Dieselaggregat einen besseren thermodynamischen Wirkungsgrad auf, was sich in niedrigeren Abgastemperaturen niederschlägt. Die Entwicklung moderner Dieselmotoren mit niedrigerem Kraftstoffverbrauch, insbesondere Direkteinspritzmotoren, bringt jedoch eine weitere Absenkung der Abgastemperatur im ECE-Zyklus (Schwachlastbereich) mit sich.

Des weiteren entsteht durch die Verbrennung schwefelhaltigen Dieselkraftstoffs primär SO₂, das bei Temperaturen > 300°C durch Edelmetalle zu SO₃ weiter oxidiert wird und in Anwesenheit von Wasser zu Schwefelsäure reagiert. Alle drei Verbindungen sind in der Lage, den Katalysator zu deaktivieren. Darüber hinaus ist das Sulfat wesentlich temperaturstabiler als das in Nitrat umgewandelte NOₓ. Durch geeignete Wahl der NOₓ-Speicherkomponenten ist es möglich, die Entschwefelungstemperatur von Dieselabgasen zu reduzieren. Derzeit liegen die Temperaturen zwischen 500 und 550 °C. Dagegen liegt die NOₓ-Konvertierung in einem Temperaturbereich von 150 bis 300°C. Ohne Desulfatisierungsmaßnahme (derzeitiger Schwefelgehalt im Dieselkraftstoff liegt zwischen 10 und 450 ppm) nimmt die NOₓ-Konvertierungsrate des Speicherkatalysators im Mager-/Fett-Zyklus linear als Funktion der Fahrstrecke oder Zeit ab.

Das im Schwachlast betriebene Brennkraftfahrzeug, d.h. z.B. nur Kurzstrecken ohne die Betriebtemperatur des Motor zu erreichen, erzeugt zu niedrige Abgastemperaturen (< 400°C), um diese mit konventionellen Maßnahmen für die Regeneration auf ein geeignetes Maß zu erhöhen, insbesondere bei sehr kalten Umgebungstemperaturen. Dies trifft auch im Leerlaufbetrieb zu, da die Abgastemperaturen noch geringer sind als im Schwachlastbereich.

Somit liegt der Erfindung die Aufgabe zugrunde, ein Verfahren vorzustellen, das es erlaubt, die Regeneration von Komponenten einer Abgasnachbehandlungsanlage unter schwierigen thermischen Bedingungen wie z.B. im Schwachlast- bzw. Leerlaufbetrieb zu ermöglichen.

Erfindungsgemäß wird die Aufgabe durch ein Verfahren mit den Merkmalen aus Anspruch 1 gelöst. Gegenstand der Ansprüche 2 bis 10 betreffen vorteilhafte Ausgestaltungen des erfindungsgemäßen Verfahrens.

Bei dem erfindungsgemäßen Verfahren zur Erhöhung der Abgastemperatur von Brennkraftmaschinen, insbesondere zum Antrieb eines Kraftfahrzeugs, durch Lastbeaufschlagung, um die nötige Regenerationstemperatur von mindestens einer Komponente einer Abgasnachbehandlungsanlage zu erreichen, ist zur Lastbeaufschlagung mindestens eine Bremse des Kraftfahrzeugs und/ oder durch das Anfahrelement des Kraftfahrzeugs vorgesehen. Hierbei ist es insbesondere vorteilhaft, dass die beiden obigen Maßnahmen das Einschalten der Bremse bzw. das Einschalten des Anfahrelementes herangezogen werden können, um die Abgastemperatur zu erhöhen. Ist lediglich eine leichte Abgastemperaturerhöhung notwendig, so kann eine oder die andere angewandt werden. Dies ist insbesondere dann der Fall, wenn der Motor im mittleren Lastbereich betrieben wird.

In einer bevorzugten Ausgestaltung der Erfindung erfolgt die Lastbeaufschlagung nur dann, wenn die Temperatur der Bremsen bzw. des Anfahrelementes kleiner als eine jeweilige entsprechende Grenztemperatur ist. Diese Sicherheitsvorkehrung vermeidet, dass die Bremsen bzw. Anfahrelemente überhitzen können.

Als besonders vorteilhaft hat sich erwiesen, bei Lastbeaufschlagung das Motormoment entsprechend zu erhöhen, um die Abgastemperatur anzuheben. Damit wird gewährleistet, dass der Eingriff vom Fahrer nicht wahrgenommen wird, obwohl ein zusätzlich mechanischer Verbraucher hinzugeschaltet wurde, wie die oben beschriebenen Bremsen bzw. Anfahrelemente. Unter dem Anfahrelement ist eine Kupplung bzw. ein Drehmomentwandler zu verstehen. Dazu gehören sämtliche Kupplungstypen wie zum Beispiel Reibungskupplungen, Mehrscheiben-Lamellen- und elektrische Magnetpulverkupplungen dazu. Ferner werden zu den Bremsen Reibungsbremsen, Retarder-Bremsen (Dauerbremsen) und Wirbelstrombremsen gezählt. So kann beispielsweise bei Reibungsbremsen die Temperatur der Bremsen an den Scheiben bzw. an den Bremsklötzen gemessen werden. Ebenso kann v.a. bei Automatgetrieben eine entsprechende Ansteuerung der internen Bremseinrichtungen zur Gangwahl verwendet werden.

Besonders vorteilhaft hat sich erwiesen, das durch die Kupplung übertragene Drehmoment des Motors unter Schlupf erfolgen zu lassen. Dies gilt besonders bei niedrigen Fahrgeschwindigkeiten, wenn die über die Bremsanlage einzubringende Verlustleistung begrenzt ist und insbesondere für den Stillstand des Fahrzeugs. Durch die Regelung der Anpresskraft wird die Kupplung zum Drehzahlwandler, das heißt, dass es über die Anpresskraft möglich ist, eine variable zuschaltbare mechanische Last einzustellen.

Eine besondere Ausgestaltung der Erfindung ist es, dabei ein Anrollen des stehenden Kraftfahrzeugs zu verhindern, in dem die Reifen durch die Bremsen blockiert werden. In einem solchen Fall, das heißt, wenn das Auto steht und der Motor läuft, ist es nur möglich eine Lastbeaufschlagung durch das Anfahrelement zu erzielen. Dabei muss das zusätzlich auftretende Drehmoment einer Kupplung bzw. einem Drehmomentwandler durch die Bremsen gehalten werden.

Als vorteilhaft hat sich ebenso erwiesen, mindestens eines der angetriebenen Räder des Kraftfahrzeugs abzubremsen bzw. zu blockieren. Durch die Erhöhung der Motorlast tritt ein zusätzliches Drehmoment auf, das nur auf die vom Motor angetriebenen Räder wirkt. Somit ist es vollkommen ausreichend, diese abzubremsen bzw. zu blockieren. Auch ist es denkbar auch nicht angetriebene Räder zu blockieren.

Als besonders vorteilhaft hat sich erwiesen, dass bei kritischen Fahrsituationen, die Lastbeaufschlagung durch die Bremsen und/ oder durch das Anfahrelement vermieden bzw. abgebrochen wird. Wird der NOₓ-Speicherkatalysator bzw. der Partikelfilter regeneriert, in dem die Motorlast erhöht wurde, muss bei einer vom Fahrer gewollten Vollbremsung die Motorlast auf ein normales Maß gedrosselt werden, so dass die Bremsen das Fahrzeug maximal verzögern können. Ebenso muss die Regeneration vermieden bzw. abgebrochen werden, wenn die zum ESP angeschlossenen Sensoren anzeigen, dass das Fahrzeug sich im Grenzbereich befindet bzw. dabei auszubrechen droht. In einem solchen Fall ist zu gewährleisten, dass die Regenerationsprozedur das ESP (Elektronische Stabilitätsprogramm) nicht behindert.

Die Erfindung wird nachfolgend unter der Bezugnahme auf die schematische Zeichnung beispielhaft noch näher erläutert. Dabei zeigen:
- Figur 1: einen Graphen, der die Abhängigkeit zwischen der anliegenden Motorlast und den entsprechenden Maßnahmen anzeigt, die notwendig sind, um die Regenerationstemperatur zu erzielen;
- Figur 2: ein Ablaufdiagramm mit Maßnahmen zur Erhöhung der Abgastemperatur.

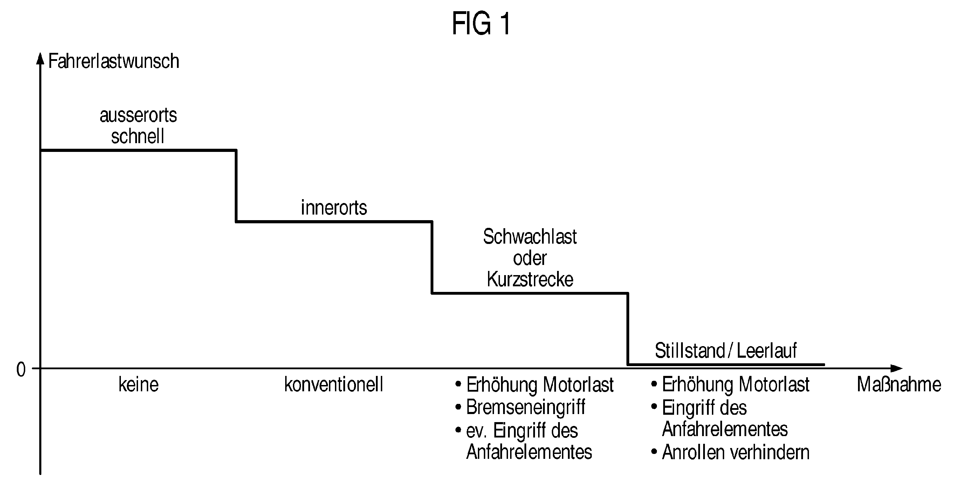

Die Figur 1 zeigt einen Graphen, der die notwendigen Maßnahmen angibt, um ausreichend hohe Abgastemperaturen zu erzielen in Abhängigkeit von der Motorlast. Im weiteren wird die Figur 1 von links nach rechts beschrieben. Die optimalste Bedingung zur Schwefel-Regeneration eines NOₓ-Speicherkatalysators ist, wenn das Kraftfahrzeug mit hoher Geschwindigkeit auf der Autobahn unterwegs ist (außerorts schnell). Es sind keine besonderen Maßnahmen notwendig, da die Abgastemperatur ausreichend ist, um den NOₓ-Speicherkatalysator zu entschwefeln. Im höheren Teillastbereich, typischerweise Fahrten innerorts, liegen die Abgastemperaturen bei ca. 400°C. So sind die oben beschriebenen Maßnahmen zur Abgastemperatursteigerung (z.B. fetter Betriebszustand) ausreichend, bei weiter reduzierten Abgastemperaturen sind aber weitere Maßnahmen, wie der beschriebene Bremseingriff, notwendig.

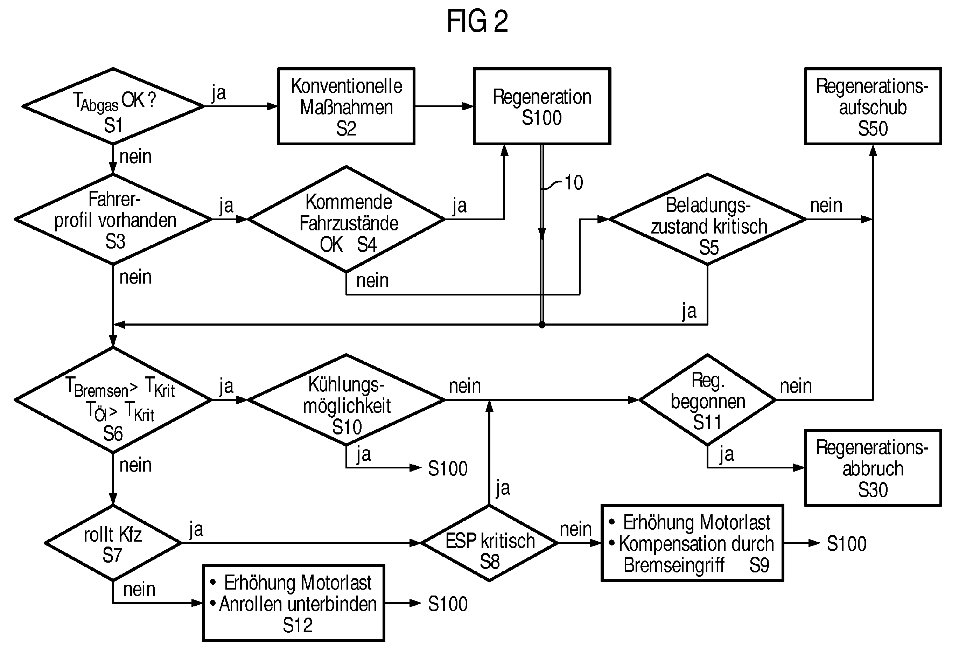

Im Folgenden wird nun Figur 2 näher beschrieben.
Im Schritt S1 werden die Anforderungen zur Regeneration, beispielsweise des NOₓ-Speicherkatalysators überprüft. Bei Abgasnachbehandlungen muss gewährleistet sein, dass die Abgastemperatur T_{Abgas} ausreichend hoch ist. Wie oben bereits beschrieben, ist dies der Fall, wenn die Abgastemperatur mindestens 400°C beträgt, da dann die konventionellen Maßnahmen (fetter Betriebszustand) in Schritt S2 ausreichend sind um die Regenerationstemperatur von ca. 650°C zu erreichen. Danach folgt die Regeneration in Schritt S100. Ist die Abgastemperatur hoch genug, so kann Schritt 2 übersprungen werden und die Regeneration des NOₓ-Speicherkatalysators in Schritt S100 begonnen werden. Ist die in Schritt S1 gemessene Abgastemperatur nicht ausreichend, so wird überprüft, ob im gespeicherten Fahrerprofil in Schritt S3 ein geeigneter Fahrzustand zu erwarten ist. Darunter ist zu verstehen, dass die Fahrzeugelektronik statistische Auswertungen des Fahrverhaltens des Fahrers vornimmt. So kann eine Auswertung in Schritt S4 erkennen, ob das Fahrzeug in nächster Zeit in einem Volllast- bzw. Teillastbereich gefahren wird. Ist ein solcher Fahrzustand zu erwarten, werden die Schritte S2 und S100 bzw. gleich Schritt S100 ausgeführt. Sind keine optimalen Fahrzustände zu erwarten, so geht es zu Schritt S5 über, bei dem überprüft wird, ob der NOₓ-Speicherkatalysator sich in einem kritischen Beladungszustand befindet. Ist dies nicht der Fall, so kann die Regeneration in Schritt S50 aufgeschoben werden. Denkbar ist es in der Anzeigetafel, eine Warnlampe einzubauen, die anzeigt, dass der Partikelfilter bzw. der NOₓ-Speicherkatalysator sich in einem kritischen Zustand befindet. Ist der Beladungszustand kritisch, so geht es zu Schritt S6 weiter. Erfindungsgemäß werden nun die Temperaturen der Bremsen und/ oder die Öltemperatur des Drehmomentwandlers bzw. die Temperatur der Kupplung überprüft. Dabei ist denkbar, dass 1, 2 oder alle 3 Temperaturen gemessen oder beispielsweise modellbasiert simuliert werden. Sind zum Beispiel die Bremsen kühl genug, dass kein Fading auftreten kann, geht es zu Schritt S7 weiter. Hierbei wird lediglich überprüft, ob das Fahrzeug rollt. Rollt das Fahrzeug nicht, so geht es Schritt S12 weiter. In diesem Fall wird eine zusätzliche mechanische Last nur durch das Anfahrelement erzielt. Dabei muss die Motorlast erhöht werden, wobei zum Beispiel diese zusätzlich auftretende Energie komplett vom Drehmomentwandler aufzunehmen ist. Diese Wärmeenergie wird an das Getriebeöl weitergeleitet. Ferner erhöht sich das Drehmoment an den angetriebenen Rädern, so dass dort evtl. die Anpresskraft der Bremsbacken erhöht werden muss. Auf alle Fälle ist ein Anrollen zu unterbinden, wenn ersichtlich ist, dass der Fahrer dies wünscht. Nach diesen Maßnahmen kann die Regeneration in Schritt S100 begonnen werden. Während der Regeneration Schritt S100 wird ständig über Pfad 10 überprüft, ob in Schritt S6 die Temperaturen der Bremsen des Öles bzw. der Kupplung nach wie vor in Ordnung sind. Überschreitet eine dieser Größen eine kritische Temperatur T_{Krit} geht es zu Schritt S10 über, bei der überprüft wird, ob es möglich ist, Kühlungsmaßnahmen zu ergreifen. Trifft dies zu, so könnte die Regeneration in Schritt S100 fortgesetzt werden. Trifft dies nicht zu, wird in Schritt S11 überprüft, ob die Regeneration in Schritt S100 bereits begonnen hat. Entsprechend geht es zu Schritt S50 also zum Regenerationenaufschub bzw. entsprechend zum Regenerationsabbruch in Schritt S30. Denkbar ist es, Regenerationsabbrüche in Schritt S30 zu dokumentieren, um einen evtl. Austausch eines NOₓ-Speicherkatalysators anzuzeigen. Rollt das Fahrzeug, wie in Schritt S7 geprüft wird, so wird zuerst überprüft, ob sich das Fahrzeug in einem kritischen Zustand befindet (Schritt S8). Wenn ja, so geht es in Schritt S11 weiter. Wenn nicht, so kann (Schritt 9) parallel zur Lastbeaufschlagung die Bremsen aktiviert werden, das heißt, die Motorlast wird entsprechend erhöht, wobei diese zusätzliche Energie entweder von den Bremsen oder durch das Anfahrelement oder durch beide aufgenommen wird. Nach diesen Maßnahmen geht es in Schritt S100 weiter. Über Pfad 10 wird nach wie vor die Temperaturen der Bremsen, Öl und Kupplung überprüft. Entsprechend wird ebenfalls hier reagiert, wenn die obig besprochenen Ereignisse eintreffen.

Insbesondere ist die in Figur 2 gezeigten Reihenfolge und Verfahrensabläufe nicht festgelegt, sondern können in beliebig technisch sinnvoller Reihenfolge stattfinden.

## Patentansprüche

1. Verfahren zur Erhöhung der Abgastemperatur von Brennkraftmaschinen, insbesondere zum Antrieb eines Kraftfahrzeugs,
durch Lastbeaufschlagung, um die nötige Regenerationstemperatur von mindestens einer Komponente einer Abgasnachbehandlungsanlage zu erreichen, **dadurch gekennzeichnet, dass** die Lastbeaufschlagung durch Aktivieren mindestens einer Bremse und/ oder durch mindestens eines Anfahrelementes erzielt wird.

2. Verfahren nach Anspruch 1, dass die Lastbeaufschlagung nur dann erfolgt, wenn die Temperatur der Bremsen und/ oder des Anfahrelementes kleiner als eine jeweilig entsprechende Grenztemperatur (Schritt S6) ist.

3. Verfahren nach mindestens einem der vorherigen Ansprüche, **dadurch gekennzeichnet, dass** bei Lastbeaufschlagung das Motormoment entsprechend erhöht wird (Schritt S9, Schritt S12).

4. Verfahren nach mindestens einem der vorherigen Ansprüche, **dadurch gekennzeichnet, dass** das Anfahrelement eine Kupplung oder ein Drehmomentwandler ist.

5. Verfahren nach mindestens einem der vorherigen Ansprüche, **dadurch gekennzeichnet, dass** die Übertragung des Drehmoments durch die Kupplung oder den Drehmomentwandler unter Schlupf erfolgt.

6. Verfahren nach mindestens einem der vorherigen Ansprüche, **dadurch gekennzeichnet, dass** bei Lastbeaufschlagung durch das Anfahrelement ein Anrollen des stehenden Kraftfahrzeug verhindert wird (Schritt S12).

7. Verfahren nach mindestens einem der vorherigen Ansprüche, **dadurch gekennzeichnet, dass** mindestens eines der angetriebenen Räder des Kraftfahrzeugs gebremst oder blockiert wird.

8. Verfahren nach mindestens einem der vorherigen Ansprüche, **dadurch gekennzeichnet, dass** bei kritischer Fahrsituation die Lastbeaufschlagung durch die Bremsen und/ oder durch das Anfahrelement vermieden (Schritt S50) oder abgebrochen (Schritt S30) wird.

9. Verfahren nach mindestens einem der vorherigen Ansprüche, **dadurch gekennzeichnet, dass** bei Erreichen der entsprechenden Regenerationstemperatur die Komponente der Abgasnachbehandlungsanlage regeneriert wird (Schritt S100).

10. Verfahren nach mindestens einem der vorherigen Ansprüche, **dadurch gekennzeichnet, dass** die Komponente einer Abgasnachbehandlungsanlage ein Partikelfilter und/ oder ein NOₓ-Speicherkatalysator ist.
